Europäisches Patentamt

**European Patent Office**

Office européen des brevets

(11) Numéro de publication: **0 216 688**
**B1**

(12) **FASCICULE DE BREVET EUROPEEN**

(45) Date de publication du fascicule du brevet:
**12.12.90**

(21) Numéro de dépôt: **86401961.7**

(22) Date de dépôt: **08.09.86**

(51) Int. Cl.⁵: **C22B 59/00, C01F 17/00**

(54) **Procédé de traitement de minerais de terres rares.**

(30) Priorité: **10.09.85 FR 8513383**

(43) Date de publication de la demande:
**01.04.87 Bulletin 87/14**

(45) Mention de la délivrance du brevet:
**12.12.90 Bulletin 90/50**

(84) Etats contractants désignés:
**AT BE CH DE FR GB IT LI LU NL SE**

(56) Documents cités:
**DE-C- 315 371**
**GB-A- 2 084 556**
**US-A- 2 811 411**
**US-A- 3 619 128**

**"GMELIN HANDBUCH DER ANORGANISCHEN
CHEMIE", Seltenerdelements, Part
B1, System-no. 39, 1976, Springer-Verlag, Berlin, DE;**

(73) Titulaire: **RHONE-POULENC CHIMIE, 25, quai Paul
Doumer, F-92408 Courbevoie Cédex(FR)**

(72) Inventeur: **Fabre, Frédéric, 10, rue Louis Blanc,
F-75010 Paris(FR)**
Inventeur: **Tognet, Jean-Paul, 2, allée du Mail,
F-17000 La Rochelle(FR)**
Inventeur: **Magnier, Claude, 3, rue des Chaufourniers,
F-75019 Paris(FR)**

(74) Mandataire: **Dutruc-Rosset, Marie-Claude et al,
RHONE-POULENC INTERSERVICES Service Brevets
Chimie 25, Quai Paul Doumer, F-92408 Courbevoie
Cédex(FR)**

## Description

La présente invention concerne un procédé de traitement de minerais de terres rares. Elle concerne plus particulièrement un procédé perfectionné de traitement de minerais de terres rares par des solutions aqueuses concentrées d'hydroxyde de métal alcalin pour récupérer les terres rares sous la forme de leurs hydroxydes.

Les procédés industriels de traitement de minerai de terres rares consistent d'une manière générale à effectuer un broyage très poussé à sec ou dans l'eau d'un minerai de terres rares tel que la monazite puis à traiter le minerai broyé par une solution aqueuse concentrée d'hydroxyde de sodium à température élevée. Par exemple le brevet US-A 2 811 411 décrit un procédé dans lequel on effectue un broyage tel que dans le minerai broyé, 100% des grains passent à travers un tamis de maille 74 µm et 95 à 98% à travers un tamis de maille 44 µm, puis le minerai broyé est traité par une solution d'hydroxyde de sodium ayant une concentration de 30 à 70%, en poids, à des températures de 135 à 220°C pendant des durées de 1 à 3 heures, avec un rapport pondéral entre l'hydroxyde de sodium et le minerai de 2 à 3. Il en résulte une consommation importante d'hydroxyde de sodium.

Dans US-A 3 619 128, on a décrit l'attaque d'un minerai de bastnaésite, à l'aide d'une solution de soude à 50%, à une température variant entre 100°C à 150°C, le rapport soude/minerai étant de 1,5.

De plus la réaction est généralement effectuée en autoclave (voir par exemple le brevet GB-A 2 084 556). La concentration en hydroxyde de sodium du milieu réactionnel diminue alors au cours du temps par suite de la consommation de ce réactif lors de la réaction. La concentration en hydroxyde de sodium est donc inférieure en fin de réaction à ce qu'elle était initialement.

Il en résulte un "adoucissement" des conditions d'attaque du minerai qui sont peu favorables à l'obtention, en un temps limité, de rendements d'attaque élevés.

Pour pallier ces inconvénients, les procédés connus requièrent à la fois l'emploi d'un fort excès de réactif (rapport pondéral initial

$$\frac{\text{NaOH}}{\text{minerai}}$$

supérieur ou égal à 2) et l'emploi d'une très forte concentration initiale en soude. Cette dernière condition nécessite l'emploi de soude anhydre, onéreuse.

La Demanderesse a découvert un procédé qui permet d'obvier aux inconvénients des procédés industriels précités et qui présente en particulier l'avantage d'opérer une meilleure attaque du minerai de terres rares, et ceci dans des conditions beaucoup plus avantageuses, sur le plan économique.

La présente invention a ainsi pour objet un procédé de traitement de minerai de lanthanides et d'yttrium par une solution aqueuse concentrée d'hydroxyde de métal alcalin pour récupérer les terres rares sous la forme de leurs hydroxydes, caractérisé en ce que l'on effectue le traitement de minerai sous agitation à la température d'ébullition de la solution alcaline d'attaque, température comprise entre 130°C et 220°C, à pression constante et avec une quantité d'hydroxyde de métal alcalin telle que le rapport pondéral hydroxyde de sodium/minerai soit inférieur à 1 et supérieur ou égal à 0,5 ou hydroxyde de potassium/minerai soit inférieur à 1,4 et supérieur ou égal à 0,7.

Selon le procédé de l'invention, le minerai de terres rares est traité à l'aide d'un hydroxyde de métal alcalin tel que l'hydroxyde de sodium, l'hydroxyde de potassium ou leurs mélanges.

On met en oeuvre, préférentiellement, la soude.

Dans l'exposé qui suit de l'invention, on définit, ci-après les quantités et les concentrations de soude mises en oeuvre qui peuvent être aisément extrapolées par l'homme de l'art dans le cas où la soude est remplacée par un autre hydroxyde de métal alcalin.

Les minerais de terres rares intervenant dans le procédé de l'invention sont tous les minerais qui peuvent être traités à l'aide d'un hydroxyde de métal alcalin. Ainsi, on traitera en particulier les phosphates contenant des terres rares notamment la monazite et le xénotime et les fluocarbonates contenant des terres rares tels que par exemple la bastnaesite ainsi que leurs mélanges, par exemple, monazite-bastnaesite.

On entend par terres rares, selon l'invention, les éléments de la classification périodique dont le numéro atomique va de 57 à 71 et l'Yttrium ayant le numéro atomique 39. Les minerais de terres rares traités selon le procédé de l'invention peuvent contenir ces éléments selon des teneurs extrêmement variables.

Les minerais de terres rares que l'on traite par le procédé selon l'invention sont de préférence des minerais au moins grossièrement broyés. Mais il peut également s'agir de minerais non broyés si la taille des particules est suffisamment fine.

Le broyage peut être effectué de manière classique à sec ou dans l'eau. Mais de préférence le broyage est effectué en présence d'une solution aqueuse concentrée d'hydroxyde de sodium à une température inférieure ou égale à 100°C.

La quantité globale d'hydroxyde de sodium qui est présente lors du traitement proprement dit est telle que le rapport pondéral hydroxyde de sodium / minerai soit de 0,5 à moins de 1. Ce rapport est exprimé en poids à sec. Il est de préférence de 0,80 à 0,95 inclus.

Selon une caractéristique importante de la présente invention on opère à pression constante. Cette pression peut être avantageusement la pression atmosphérique ; mais des pressions constantes allant jusqu'à $3.10^6$ Pa peuvent être utilisées.

Dans ces conditions en effet, la concentration en hydroxyde de sodium du milieu réactionnel garde une valeur constante par suite d'une évaporation d'eau, valeur fixée, pour chaque pression de travail, par la température imposée. Ce fait est très favorable à l'obtention de rendements élevés, les conditions d'attaque restant en effet tout aussi sévères en fin de réaction qu'elles l'étaient au début du processus. Le procédé selon la présente invention permet de ce fait de limiter l'excès d'hydroxyde de sodium à utiliser et de réaliser une économie globale importante par rapport aux procédés traditionnels.

La température peut varier de 100 à 220°C et est de préférence de 130 à 180°C.

La concentration de la solution d'hydroxyde de sodium (réglée par la pression et la température) peut en pratique être de 20 à 65% en poids. On peut faire appel, d'une manière préférentielle, à une lessive commerciale de soude à 48-50% en poids.

La Demanderesse a par ailleurs découvert que pour une pression donnée, la cinétique de la réaction est une fonction croissante de la concentration en hydroxyde de sodium et donc de la température, mais que le rendement diminue au-delà d'une certaine température. Il existe donc pour chaque pression une gamme optimale de températures permettant à la fois d'obtenir une cinétique rapide et des rendements élevés. De plus au-delà de certaines concentrations en hydroxyde de sodium, on se heurte à des problèmes de fluidité de la solution d'attaque.

Aussi selon une autre caractéristique de la présente invention on règle la température à une valeur correspondant sensiblement à la valeur optimale. Cette valeur optimale peut être aisément déterminée par des essais préliminaires pour chaque valeur de pression.

Ainsi à titre d'exemple lorsqu'on opère à la pression atmosphérique, l'intervalle optimal de température est de 145 à 165°C correspondant à une concentration en hydroxyde de sodium d'environ 50 à 62%. Cet intervalle se déplace vers les températures plus élevées lorsque la pression augmente.

Le procédé selon la présente invention permet :
- d'obtenir des rendements d'attaque supérieurs aux rendements obtenus en système clos (autoclave ), à pression non contrôlée,
- d'obtenir des cinétiques d'attaques plus rapides,
- de réaliser des économies en réactifs substantielles puisque le rapport

$$\frac{NaOH}{minerai}$$

utilisé est inférieur à 1,
- de permettre, également, d'atteindre, pour des minerais grossièrement broyés, voire non broyés, l'équilibre de la réaction en un temps identique à celui nécessaire en autoclave pour des minerais très finement broyés et donc de réaliser, à productivité égale, des économies énergétiques (sur le broyage).

Les exemples suivants illustrent la présente invention :

Exemple 1 : Une monazite australienne dont la composition est donnée par le tableau suivant :

| CONSTITUANTS | POURCENTAGE EN POIDS |
|---|---|
| $ThO_2$ | 6,7 % |
| Oxydes de terres rares | 59,3 % |
| $P_2O_5$ | 26,5 % |
| $SiO_2$ | 3,1 % |
| $ZrO_2$ | 3,0 % |

est broyée jusqu'à une dimension telle que le refus au tamis de 40 µm soit de 15% en poids.

Après broyage cette monazite est attaquée par une solution aqueuse d'hydroxyde de sodium dans un réacteur sous agitation dans les conditions suivantes :
- Pression atmosphérique
- Rapport pondéral

$$\frac{NaOH}{minerai} \text{ initial} = 0,85$$

- Concentration de la solution de soude employée = 48% en poids (lessive commerciale)
- La température est maintenue à une valeur comprise entre 140 et 150°C.

Après 3 h, le rendement d'attaque obtenu (taux de conversion des phosphates de terres rares et de thorium en hydroxydes correspondants) est de 97,5%.

Exemple comparatif :

Cet exemple, donné à titre comparatif, montre l'intérêt du procédé de l'invention, par rapport au procédé de l'art antérieur, tel que décrit dans le brevet américain n° 2 822 411.

Une tonne de monazite australienne de même composition que celle donnée dans l'exemple 1 est broyée à sec jusqu'à dimension de particules telle, que leur refus au tamis de 40 microns soit égal à 5%. Dans un réacteur agité et clos (autoclave) on introduit la monazite broyée et une solution d'hydroxyde de sodium à 48% ; le rapport pondéral hydroxyde de sodium/minerai est égal à 3, la température du réacteur est comprise entre 160 et 170°C, le temps de réaction est de 3 heures.

Dans ces conditions, c'est-à-dire malgré l'excès considérable d'hydroxyde de sodium mis en oeuvre et le broyage poussé du minerai, le taux d'attaque obtenu n'est que de 93%.

Exemple 2 :

La même monazite qu'à l'exemple 1, broyée aux mêmes dimensions qu'à l'exemple comparatif (5% refus à 40 μm) est attaquée selon le procédé revendiqué dans un réacteur sous agitation dans les conditions suivantes :
- Pression atmosphérique
- 152,5°C
- [NaOH] = 55,6% en poids
- Rapport pondéral

$$\frac{NaOH}{minerai} = 0,95$$

La réaction atteint son équilibre en 20 mn et le rendement est alors de 97,2%.

Cet exemple montre que l'attaque, dans des conditions de température moins sévères, est, par le procédé revendiqué, plus efficace que dans l'exemple comparatif tout en présentant une cinétique extrêmement rapide.

Exemple 3 :

La monazite australienne est classée entre 80 et 100 μm. La fraction 80-100 μm est attaquée sans être broyée dans un réacteur sous agitation dans les conditions suivantes :
- Pression atmosphérique
- [NaOH] = 52% en poids
- Température = 147,8°C
- Rapport pondéral

$$\frac{NaOH}{minerai} = 0,95$$

La réaction atteint son équilibre en 3 h 30 et le rendement est de 95,1%.

Cet exemple montre que le procédé permet d'atteindre des rendements aussi élevés que dans l'exemple 2 dans des conditions de température moins sévères et surtout sans avoir à broyer préalablement le minerai.

Exemple 4 :

La monazite australienne est broyée comme à l'exemple 2.

Elle est attaquée dans un réacteur sous agitation dans les conditions suivantes :
- Pression atmosphérique
- Température = 167°C
- [NaOH] = 63,0% en poids - Rapport pondéral

$$\frac{NaOH}{minerai} = 0,95$$

L'équilibre est atteint en 15 mn seulement mais le rendement n'atteint que 91%. Cet exemple montre les conditions limites à ne pas dépasser sous peine de voir les rendements chuter.

**Revendications**

1. Procédé de traitement d'un minerai de lanthanides et d'yttrium par une solution aqueuse concentrée d'hydroxyde de métal alcalin pour récupérer les terres rares sous la forme de leurs hydroxydes, caractérisé en ce que l'on effectue le traitement du minerai sous agitation à la température d'ébullition de la solution alcaline d'attaque, à une température comprise entre 130°C et 220°C à une pression constante et avec une quantité d'hydroxyde de métal alcalin telle que le rapport pondéral hydroxyde de sodium/minerai soit inférieur à 1 et supérieur ou égal à 0,5 ou hydroxyde de potassium/minerai soit inférieur à 1,4 et supérieur ou égal à 0,7.

2. Procédé selon la revendication 1, caractérisé en ce que l'hydroxyde de métal alcalin est l'hydroxyde de sodium.

3. Procédé selon la revendication 2, caractérisé en ce que le rapport pondéral hydroxyde de sodium/minerai est de 0,80 à 0,95 inclus.

4. Procédé selon l'une quelconque des revendications 1 à 3, caractérisé en ce que la pression constante est une pression dans la gamme allant de la pression atmosphérique à $3.10^6$Pa.

5. Procédé selon la revendication 4, caractérisé en ce que la pression constante est la pression atmosphérique.

6. Procédé selon l'une quelconque des revendications 1 à 5, caractérisé en ce que la température d'ébullition est comprise entre 130 et 180°C.

7. Procédé selon l'une quelconque des revendications 2 à 6, caractérisé en ce que la concentration de la solution d'hydroxyde de sodium est de 20 à 65% en poids.

8. Procédé selon l'une quelconque des revendications 1 à 7, caractérisé en ce qu'on règle la température à une valeur optimale déterminée par des essais préliminaires.

9. Procédé selon l'une quelconque des revendications 2 à 8, caractérisé en ce qu'on opère à la pression atmosphérique et l'on règle la température dans l'intervalle de 130 à 165°C.

10. Procédé selon la revendication 9 caractérisé en ce que ladite température est comprise entre 145 et 165°C.

11. Procédé selon l'une des revendications 1 à 10 caractérisé en ce que le minerai de terres rares comprend des phosphates de terres rares, des fluocarbonates de terres rares ou leurs mélanges.

12. Procédé selon la revendication 11 caractérisé en ce que le minerai de terres rares est la monazite, le xénotime, la bastnaésite ou leur mélange.

13. Procédé selon la revendication 12 caractérisé en ce que le minerai de terres rares est la monazite.

**Claims**

1. A method of treating an ore of lanthanides and of yttrium with a concentrated aqueous alkali metal hydroxide solution to recover the rare-earth metals in hydroxide form, characterised in that the ore is treated by agitating it at the boiling temperature of the alkaline attacking solution, from 130° to 220°C and at constant pressure, with a quantity of alkali metal hydroxide, such that the weight ratio of sodium hydroxide/ore is less than 1:1 and equal to 0.5:1 or over, or such that the weight ratio of potassium hydroxide/ore is less than 1.4:1 and equal to 0.7:1 or over.

2. The method of Claim 1, characterised in that the alkali metal hydroxide is sodium hydroxide.

3. The method of Claim 2, characterised in that the weight ratio of sodium hydroxide/ore is from 0.80:1 to 0.95:1 inclusive.

4. The method of any of Claims 1 to 3, characterised in that the constant pressure is a pressure within the range from atmospheric pressure to $3.10^6$Pa.

5. The method of Claim 4, characterised in that the constant pressure is atmospheric pressure.

6. The method of any of Claims 1 to 5, characterised in that the temperature is from 130 to 180°C.

7. The method of any of Claims 2 to 6, characterised in that the concentration of the sodium hydroxide solution is from 20 to 65% by weight.

8. The method of any of Claims 1 to 7, characterised in that the temperature is set to an optimum value determined by preliminary tests.

9. The method of any of Claims 2 to 8, characterised in that the process is carried out at atmospheric pressure and the temperature is set within the range from 130 to 165°C.

10. The method of Claim 9, characterised in that the temperature is from 145 to 165°C.

11. The method of any of Claims 1 to 10, characterised in that the ore of rare-earth metals comprises phosphates of rare-earth metals, fluorocarbonates of rare-earth metals or mixtures thereof.

12. The method of Claim 11, characterised in that the ore of rare-earth metals is monazite, xenotime, bastnasite or a mixture thereof.

13. The method of Claim 12, characterised in that the ore of rare-earth is monazite.

## Patentansprüche

1. Verfahren zur Behandlung eines die Lanthanoide und Yttrium enthaltenden Erzes zur Gewinnung der Seltenerdmetalle in der Form ihrer Hydroxide durch eine wässrige konzentrierte Alkalihydroxidlösung, dadurch gekennzeichnet, daß man die Erzbehandlung unter Rühren bei der Siedetemperatur der angreifenden Alkalilösung bei einer Temperatur zwischen 130°C und 220°C unter einem konstanten Druck und mit einer solchen Alkalihydroxidmenge, daß das Gewichtsverhältnis von Natriumhydroxid/Erz kleiner als 1 und größer oder gleich 0,5 oder zwischen Kaliumhydroxid und Erz kleiner als 1,4 und größer oder gleich 0,7 ist, durchführt.

2. Verfahren nach Anspruch 1, dadurch gekennzeichnet, daß das Alkalihydroxid Natriumhydroxid ist.

3. Verfahren nach Anspruch 2, dadurch gekennzeichnet, daß das Gewichtsverhältnis Natriumhydroxid/Erz 0,80 bis 0,95 beträgt.

4. Verfahren nach einem der Ansprüche 1 bis 3, dadurch gekennzeichnet, daß der konstante Druck ein Druck ist, der im Bereich von Atmosphärendruck bis $3.10^6$ Pa liegt.

5. Verfahren nach Anspruch 4, dadurch gekennzeichnet, daß der konstante Druck gleich dem Atmosphärendruck ist.

6. Verfahren nach einem der Ansprüche 1 bis 5, dadurch gekennzeichnet, daß die Siedetemperatur zwischen 130°C und 180°C beträgt.

7. Verfahren nach einem der Ansprüche 2 bis 6, dadurch gekennzeichnet, daß die Konzentration der Natriumhydroxidlösung 20 bis 65 Gewichtsprozent beträgt.

8. Verfahren nach einem der Ansprüche 1 bis 7, dadurch gekennzeichnet, daß man die Temperatur auf eine durch vorhergehende Versuche bestimmte optimale Größe einstellt.

9. Verfahren nach einem der Ansprüche 2 bis 8, dadurch gekennzeichnet, daß man unter Atmosphärendruck arbeitet und die Temperatur in einem Bereich von 130°C bis 165°C einstellt.

10. Verfahren nach Anspruch 9, dadurch gekennzeichnet, daß diese Temperatur zwischen 145°C und 165°C beträgt.

11. Verfahren nach einem der Ansprüche 1 bis 10, dadurch gekennzeichnet, daß das Seltenerdmetall-Erz Phosphate und Fluorcarbonate der Seltenerdmetalle oder ihre Gemische enthält.

12. Verfahren nach Anspruch 11, dadurch gekennzeichnet, daß das Seltenerdmetall-Erz Monazit, Xenotim, Bastnäsit oder ihr Gemisch ist.

13. Verfahren nach Anspruch 12, dadurch gekennzeichnet, daß das Seltenerdmetall-Erz Monazit-ist.